# EUROPÄISCHE PATENTSCHRIFT

(11) **EP 3 038 893 B1**
(45) Veröffentlichungstag und Bekanntmachung des Hinweises auf die Patenterteilung: **20.11.2019**
(21) Anmeldenummer: 14761591.8
(22) Anmeldetag: 25.08.2014
(51) Int. Cl.: B62L 3/02

(54) **GEBERARMATUR**
MASTER CYLINDER FITTING
MAÎTRE-CYLINDRE

(30) Priorität: 27.08.2013 DE 102013217056; 20.12.2013 DE 102013227027; 25.02.2014 DE 102014203399
(43) Veröffentlichungstag der Anmeldung: 06.07.2016
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese Goeden Patentanwälte PartGmbB
(86) Internationale Anmeldenummer: PCT/EP2014/068002
(87) Internationale Veröffentlichungsnummer: WO 2015/028429

(56) Entgegenhaltungen:
- EP-A2- 2 520 479
- DE-A1- 3 312 192
- DE-A1-102006 036 415
- DE-A1-102006 040 328
- DE-A1-102007 040 364
- DE-A1-102010 040 045
- DE-T2- 69 827 145
- TW-A- 201 033 077
- US-A1- 2003 121 262
- US-A1- 2008 011 566
- US-A1- 2012 152 673

## Beschreibung

Die Erfindung betrifft eine Geberarmatur für ein hydraulisches Betätigungselement mit einem Zylinder und einem in dem Zylinder geführten Kolben. Geberarmaturen der Eingangs genannten Art können beispielsweise für hydraulische Bremsen oder Kupplungsbetätigungen verwendet werden. Geberarmaturen für ein hydraulisches Betätigungselement für ein lenkergeführtes Fahrzeug sind aus den Patentveröffentlichungen US-A1-2012/0152673, DE-T2-69827145 und US-A1-2003/0121262 bekannt.

Aus der Praxis sind Scheibenbremsen für lenkergeführte Fahrzeuge bekannt, beispielsweise Fahrräder. Bei diesen bekannten Scheibenbremsen ist eine Geberarmatur am Lenker angeordnet, welche in der Regel einen Ausgleichsraum für ein Hydraulikmedium aufweist. Der Ausgleichsraum steht mit dem Zylinder einer Kolben-Zylinder-Paarung in Kontakt, so dass bei zunehmendem Bremsbelagverschleiß Hydraulikmedium aus dem Ausgleichsraum nachströmen kann. Außerdem können durch Temperaturschwankungen bedingte Volumenänderungen ausgeglichen werden, welche beispielsweise aufgrund der Witterung oder bei langen Bremsvorgängen auftreten können. Das Hydraulikmedium im Zylinder kann durch den Kolben unter Druck gesetzt werden. Bei Bewegung des Kolbens überfährt eine am Kolben angebrachte Dichtung die Verbindungsöffnung zum Ausgleichsraum, so dass bei Betätigung der Bremse das Hydrauliksystem geschlossen wird und der bei Betätigung der Geberarmatur aufgebaute Druck nicht über den Ausgleichsraum abgebaut wird. An den Zylinder schließt eine Hydraulikleitung an, welche die Betätigungskraft zum Nehmerzylinder der Bremse oder einer Kupplungsbetätigung leitet.

Diese bekannten Geberarmaturen haben den Nachteil, dass die Endmontage bei der Herstellung vergleichsweise aufwändig ist und die Geberarmatur entlang der Zylinderachse relativ langbauend ausgebildet ist. Insbesondere bei radialen Armaturen, bei welchen die Zylinderachse senkrecht zur Achse des Lenkers verläuft, ergibt sich dadurch ein großer Bauraum und daraus resultierend ein vergleichsweise großer Abstand zwischen Lenkerrohr und Handhebel, so dass die Bedienung für Personen mit kleinen Händen eingeschränkt sein kann.

Der Erfindung liegt daher die Aufgabe zugrunde, eine Geberarmatur für ein hydraulisches Betätigungselement anzugeben, welche einfach zu montieren und herzustellen ist und eine kompakte Größe aufweist.

Die Aufgabe der Erfindung wird durch eine Geberarmatur gemäß Anspruch 1 gelöst. Erfindungsgemäß wird vorgeschlagen, für ein lenkergeführtes Fahrzeug ein hydraulisches Betätigungselement zu verwenden. Das Betätigungselement kann insbesondere eine Scheiben- oder Felgenbremse oder eine hydraulische Kupplungsbetätigung sein. In jedem Fall weist das Betätigungselement einen Nehmerzylinder auf, welcher mit einem Hydraulikfluid beaufschlagt wird, woraufhin sich ein Kolben im Zylinder bewegt und die gewünschte Funktion ausführt, beispielsweise einen Bremsbelag gegen eine Reibpartner zu führen oder eine Kupplung zu trennen.

Um das hydraulische Betätigungselement mit einem unter Druck gesetzten Hydraulikfluid zu beaufschlagen, ist das Betätigungselement über eine Druckleitung mit einer Geberarmatur verbunden. Die Geberarmatur kann beispielsweise über einen Handhebel oder ein Fußpedal bedient werden. In einigen Ausführungsformen der Erfindung ist die Geberarmatur am Lenkerrohr eines lenkergeführten Fahrzeugs befestigt und wird über einen Handhebel vom Benutzer des Fahrzeugs bedient. Das Fahrzeug kann in einigen Ausführungsformen der Erfindung ein Fahrrad, ein Motorrad, ein Schneemobil oder ein Quad sein.

Die Geberarmatur weist eine Kolben-Zylinder-Paarung auf, bei welcher in einem Gehäuse eine Zylinderbohrung ausgebildet ist und in dieser Zylinderbohrung ein Kolben geführt ist, d.h. der Kolben ist entlang der Längsrichtung des Zylinders verschieblich. Hierdurch kann das freie Volumen der Zylinderbohrung in Abhängigkeit der Stellung des Kolbens vergrößert oder verkleinert werden, so dass das Hydraulikfluid aus dem Zylinder ausströmt, bzw. im Zylinder unter Druck gesetzt werden kann, wenn auf den Kolben eine Kraft ausgeübt wird.

Erfindungsgemäß wird vorgeschlagen, dass der Innendurchmesser des Zylinders in zumindest einem Längsabschnitt größer ist als der Außendurchmesser des Kolbens. Auf diese Weise kann der Kolben bei der Endmontage der Geberarmatur leicht in die Zylinderbohrung eingeführt werden, auch wenn am Kolben eine umlaufende Dichtung angeordnet ist, welche den Kolben gegen die Zylinderwand abdichtet und dementsprechend eine enge Passung ausbildet.

Damit der Kolben im Betrieb zuverlässig im Zylinder geführt werden kann, wird in einem nächsten Montageschritt zumindest in einem Teilabschnitt des genannten Längsabschnittes eine Buchse angeordnet, in deren Innenraum der Kolben führbar ist. Der Innendurchmesser der Buchse entspricht somit im Wesentlichen dem Innendurchmesser des Zylinders. Die Buchse verkleinert damit den Innendurchmesser im genannten Längsabschnitt soweit, dass der Kolben sicher im Zylinder geführt werden kann. Auf diese Weise ist eine rasche und kostengünstige Endmontage der Geberarmatur möglich.

In einigen Ausführungsformen der Erfindung kann zwischen der Stirnfläche der Buchse und einer Anlagefläche eine zweite Dichtung angeordnet sein. Die zweite Dichtung dichtet den Zylinder gegenüber der Umgebung ab. Dadurch wird das Austreten von Hydraulikfluid und eine Verschmutzung der Geberarmatur durch Hydraulikfluid vermieden.

In einigen Ausführungsformen der Erfindung enthält die Geberarmatur einen Ausgleichsraum mit einem Innenraum, welcher über einen Verbindungskanal mit dem Zylinder verbindbar ist. Mit zunehmendem Verschleiß der Bremsbeläge und/oder bei Temperaturänderungen kann sich das Volumen des Hydraulikfluids verändern. In diesem Fall kann Hydraulikfluid an den Ausgleichsraum abgegeben werden oder aus dem Ausgleichsraum nachströmen, wenn der Verbindungskanal zwischen dem Ausgleichsraum und dem Zylinder geöffnet ist. Beim Verschließen des Verbindungskanals ist das Hydrauliksystem zwischen Zylinder und Betätigungselement geschlossen, so dass vom Benutzer das Hydraulikfluid mit Druck beaufschlagt werden kann.

Erfindungsgemäß ist zumindest an der Mündung des Verbindungskanals in den Zylinder ein Überströmkanal angeordnet. Dieser Überströmkanal hat die Wirkung, dass die zwischen Kolben und Zylinderwand angeordnete Dichtung im Bereich des Überströmkanals nicht an der Zylinderwand anliegt und das Hydraulikfluid aus dem Zylinder über den Überströmkanal in den Verbindungskanal und von dort in den Ausgleichsraum strömen kann. Bei Betätigung des Kolbens überfährt dieser den Überströmkanal, so dass die Dichtung zwischen Kolben und Zylinder vollflächig anliegt und den Zylinder abdichtet.

In einigen Ausführungsformen kann das Gehäuse mit dem Zylinder aus einem Kunststoff hergestellt sein, beispielsweise durch Spritzgießen. Der Kunststoff kann in einigen Ausführungsformen der Erfindung eine Faserverstärkung aufweisen, beispielsweise durch Kohlefasern und/oder Glasfasern und/oder Aramidfasern. Zumindest ein Verbindungskanal und/oder ein Überströmkanal in der Wandung des Zylinders kann ebenfalls beim Urformen des Gehäuses durch Spritzgießen hergestellt werden, so dass eine kostengünstige Fertigung mit hoher Bauteilqualität möglich wird.

In einigen Ausführungsformen der Erfindung kann der Überströmkanal als ringförmige Nut in die Zylinderwandung eingebracht sein. In diesem Fall ist die Nut so tief, dass die Dichtung in der Nut aufgenommen werden kann und dennoch ein Spalt zum Überströmen des Hydraulikfluids zwischen der Außenfläche der Dichtung und der Innenfläche der Zylinderwand verbleibt.

In anderen Ausführungsformen der Erfindung kann der Überströmkanal nur in einem engen Winkelbereich um die Mündung des Verbindungskanals ausgeformt sein, so dass die Dichtung im größeren Teil des Umfangs der Zylindermantelfläche vollflächig an der Zylinderwandung anliegt. In diesem Fall kann die Zylinderwandung die Dichtung stützen, so dass der Überströmkanal nicht von der Dichtung verlegt wird. Durch den Überströmkanal kann auf die Verwendung einer Nachlaufscheibe verzichtet werden.

In einigen Ausführungsformen kann zwischen Kolben und Zylinder eine erste Dichtung angeordnet sein. Die erste Dichtung kann auf dem Kolben angeordnet sein bzw. der Kolben kann die erste Dichtung tragen. Hierdurch wird der bei Betätigung des Geberzylinders der sich aufbauende Druck im Zylinder von der zweiten Dichtung und/oder der Buchse fern gehalten, so dass die mechanische Befestigung der Buchse schwächer dimensioniert werden kann. Hierdurch kann die Montage der Buchse vereinfacht sein.

Die erste Dichtung kann in einigen Ausführungsformen der Erfindung eine X-Dichtung sein. In anderen Ausführungsformen der Erfindung kann die erste Dichtung ein Lippendichtring sein. Die erste Dichtung sorgt einerseits dafür, dass Kolben und Zylinder dichtend miteinander verbunden sind, so dass durch Beaufschlagen des Kolbens mit einer Kraft das im Zylinder befindliche Hydraulikfluid verdrängt werden kann, bzw. mit Druck beaufschlagt werden kann. Andererseits verhindert die erste Dichtung, dass das Hydraulikfluid auf der Rückseite des Kolbens austritt und damit die Geberarmatur oder die Umgebung verunreinigt.

In einigen Ausführungsformen der Erfindung kann die Buchse ein Außengewinde aufweisen und in ein Innengewinde im Gehäuse der Geberarmatur eingeschraubt sein. Dies erlaubt eine einfache und zuverlässige Montage, da die Buchse nach Einführen des Kolbens in die Zylinderöffnung lediglich rückwärtig in die Zylinderbohrung eingeschraubt werden muss und in einigen Ausführungsformen durch das Anzugsdrehmoment der Buchse die auf die zweite Dichtung ausgeübte Kraft eingestellt werden kann. Sofern die Gewindepaarung mit einer Sicherung, beispielsweise einem Sicherungslack bzw. einem Klebstoff versehen ist, wird unbeabsichtigtes Lösen der Buchse zuverlässig verhindert.

In einigen Ausführungsformen der Erfindung bildet die Buchse eine Presspassung in der Bohrung im Gehäuse der Geberarmatur aus. Dies erleichtert die Montage weiter, da nach Einführen des Kolbens in den Zylinder die Buchse lediglich gerade an die Bohrung angesetzt und eingepresst werden muss. Damit ergibt sich eine zuverlässige Verbindung, welche sich nicht zufällig lösen kann und welche rasch und kostengünstig montiert werden kann. Durch die Einpresstiefe der Buchse kann die auf die zweite Dichtung ausgeübte Kraft eingestellt werden.

In einigen Ausführungsformen der Erfindung ist die Buchse in eine Bohrung im Gehäuse der Geberarmatur eingesetzt und dort mit einer Sicherungsschraube fixiert. Diese Ausführungsform erlaubt eine ebenso rasche Montage und kann reversibel gelöst werden, beispielsweise um Wartungsarbeiten auszuführen oder defekte Teile der Geberarmatur auszutauschen.

In einigen Ausführungsformen der Erfindung kann die Buchse in eine Bohrung im Gehäuse der Geberarmatur eingesetzt und dort durch einen Teilabschnitt eines Deckels des Ausgleichsraums fixiert sein. Auch diese Ausführungsform der Erfindung lässt sich zu Wartungsarbeiten rasch demontieren, so dass schadhafte Teile der Kolben-Zylinder-Paarung einfach ausgetauscht werden können. Auf eine zusätzliche Sicherungsschraube kann jedoch verzichtet werden, wenn ein anderer Gehäuseteil, beispielsweise ein Teilabschnitt eines Deckels des Ausgleichsraums, so über der Zylinderbohrung angeordnet ist, dass die Buchse formschlüssig verriegelt ist und nicht ungewollt aus der Bohrung herausfallen kann. Eine solche Ausführungsform kann einfacher zu montieren sein, weil eine zusätzliche Sicherungsschraube entfällt und weiterhin zuverlässiger sein, da der Gehäusedeckel üblicherweise mit mehreren Schrauben fixiert ist und das Versagen einer Schraubverbindung nicht zum Verlust der Buchse und damit zum Ausfall des Gebers führen kann.

In einigen Ausführungsformen der Erfindung weist die Buchse eine Anschlagfläche auf, gegen welche der Kolben mit einer Druckfeder führbar ist. In diesem Fall ist das später beschriebene Abschlusselement integraler Bestandteil der Buchse. Auf diese Weise definiert die Buchse die äußerste Position des Kolbens bzw. eine Ruhelage der Geberarmatur, in welcher das Volumen des Zylinders maximal ist und das Hydraulikfluid nicht mit Druck beaufschlagt ist. Durch Verschieben der Buchse entlang der Längserstreckung der Zylinderbohrung, beispielsweise durch Einschrauben einer mit einem Außengewinde versehenen Buchse oder tieferes Einpressen der Buchse, kann die maximale Ruhelage entsprechend dem Anwendungszweck eingestellt werden. Gleichzeitig verhindert die beschriebene Ausführungsform, dass der Kolben verloren gehen kann und die Geberarmatur somit funktionslos wird, solange die Buchse an der vorgesehenen Position ist.

In einigen Ausführungsformen der Erfindung ist die Anschlagfläche gegen welche der Kolben mit einer Druckfeder führbar ist, entlang ihrer Umfangsfläche durch zumindest eine Aussparung unterbrochen sein. Hierdurch können Verunreinigungen durch die rückwärtige Fläche des Kolbens ausgeschoben werden. Weiterhin kann in einigen Ausführungsformen der Erfindung die mittels eines Handhebels erzeugbare Kraft über ein Druckstück auf den Kolben übertragen werden, wobei das Druckstück in die Aussparungen eingreifen kann.

In einigen Ausführungsformen kann die mittels eines Handhebels erzeugbare Kraft über ein Druckstück auf den Kolben übertragen werden, wobei zwischen dem Druckstück und dem Gehäuse eine Schenkelfeder angeordnet ist. Diese Ausführungsform erlaubt eine Griffweiteneinstellung, indem der Abstand des Handhebels zum Druckstück verändert wird. Auf diese Weise kann die Geberarmatur universell für Benutzer mit großen oder kleinen Händen angepasst werden. Um beim Lösen der auf den Handhebel ausgeübten Kraft dem zurückfahrenden Kolben eine geringere Widerstandskraft entgegenzusetzen, wird das Druckstück über eine Feder in die Ruhestellung bewegt. Die Verwendung einer Schenkelfeder ermöglicht dabei eine kompakte Bauform, so dass das Geberelement insgesamt kleiner und kompakter aufgebaut werden kann.

Nachfolgend soll die Erfindung anhand von Figuren ohne Beschränkung des allgemeinen Erfindungsgedankens näher erläutert werden. Dabei zeigt
Fig. 1 eine Seitenansicht einer Geberarmatur gemäß einer ersten Ausführung der Erfindung.
Fig. 2 zeigt eine perspektivische Ansicht der Geberarmatur gemäß Fig. 1.
Fig. 3 zeigt eine Ansicht der Geberarmatur gemäß Fig. 1 von unten.
Fig. 4 zeigt eine Schnittansicht der Geberarmatur gemäß Fig. 1.
Fig. 5 zeigt eine vergrößerte Detailansicht der Fig. 4 und
Fig. 6 zeigt eine vergrößerte Detailansicht der Fig. 5.
Fig. 7 zeigt ein Detail der Geberarmatur gemäß Fig. 1 in einer anderen Schnittebene.
Fig. 8 zeigt eine perspektivische Darstellung eines Bolzens der Druckpunkteinstellung.
Fig. 9 zeigt eine Seitenansicht des Bolzens gemäß Fig. 8.
Fig. 10 zeigt eine perspektivische Ansicht der Geberarmatur gemäß Fig. 1.
Fig. 11 zeigt einen vergrößerten Ausschnitt aus Fig. 10.
Fig. 12 zeigt einen vergrößerten Ausschnitt aus Figur 5.
Fig. 13 zeigt eine Seitenansicht einer Geberarmatur gemäß einer zweiten Ausführung der Erfindung
Fig. 14 zeigt einen vergrößerten Ausschnitt aus Figur 2.
Fig. 15 zeigt einen vergrößerten Ausschnitt aus Figur

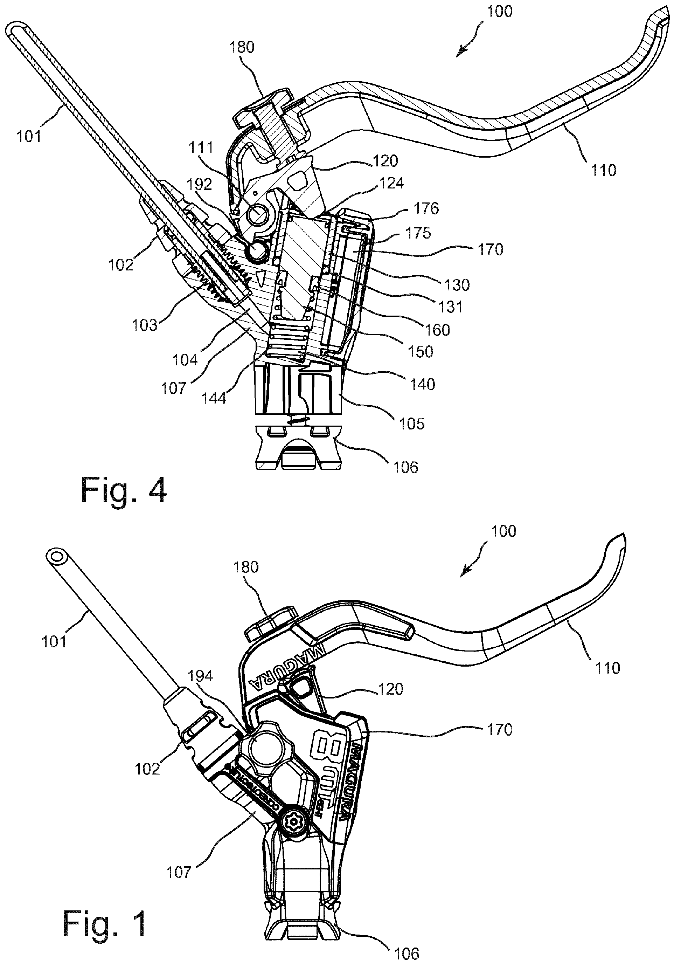

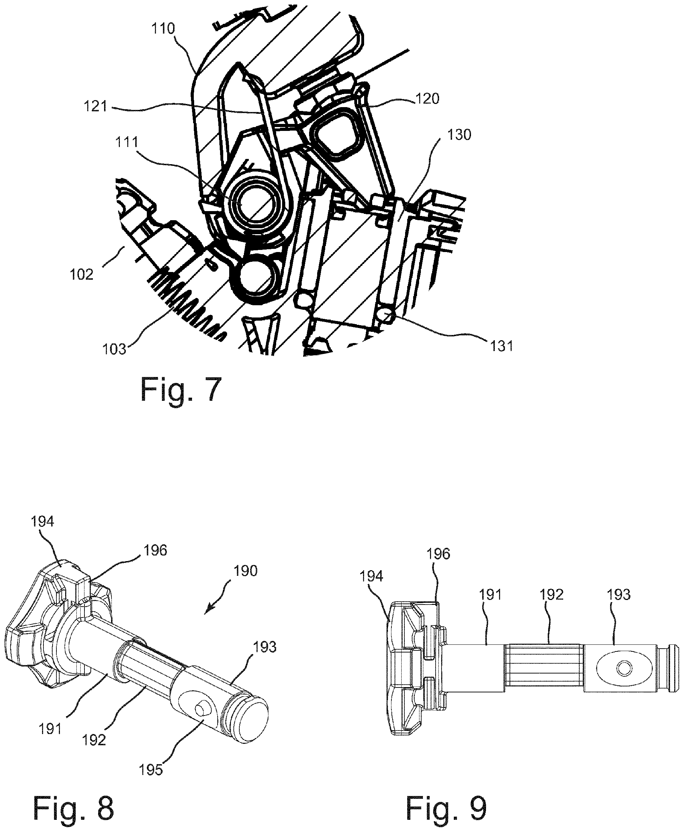

Die Figuren 1 bis 7 sowie Fig. 10 bis 12 zeigen eine Geberarmatur für eine hydraulische Fahrradscheibenbremse gemäß einer Ausführung der Erfindung. Der Anwendungszweck ist dabei nur beispielhaft zu verstehen. In anderen Ausführungsformen der Erfindung kann die Geberarmatur auch für andere hydraulische Betätigungselemente verwendet werden, beispielsweise für Fahrradfelgenbremsen oder eine Brems- oder Kupplungsbetätigung eines motorbetriebenen Fahrzeuges oder eines Pedelecs oder eines E-Bikes.

Die Geberarmatur 100 weist einen Handhebel 110 und ein Druckstück 120 auf, welche jeweils über einen Lagerbolzen 111 drehbar an einem Gehäuse 107 gelagert sind. Der Handhebel 110 ist um den Lagerbolzen 111 drehbar gelagert. Das Druckstück 120 ist um den Lagerbolzen 111 drehbar gelagert.

Die Geberarmatur 100 weist einen Gehäuseabschnitt 105 auf, welcher im Wesentlichen komplementär zum Lenkerrohr eines lenkergeführten Fahrzeuges geformt ist, so dass das Gehäuse 107 der Geberarmatur 100 mit der Klemmschelle 106 am Lenkerrohr befestigt werden kann.

Eine Hydraulikleitung 101 ist am Gehäuse 107 mit einer Verschraubung 103 und einer Abdeckkappe 102 fluiddicht befestigt, so dass das Hydraulikfluid an der Verbindungsstelle zwischen der Hydraulikleitung 101 und dem Gehäuse bei normalem Betriebsdruck nicht austreten kann. Am anderen Ende der Hydraulikleitung 101 ist ein hydraulisches Betätigungselement mit zumindest einem Nehmerzylinder befestigt, beispielsweise einer Bremszange.

Im Gehäuse 107 ist eine Zylinderbohrung 140 vorgesehen. Die Zylinderbohrung 140 kann beispielsweise durch spanende Bearbeitung im Gehäuse 107 erzeugt werden oder bei Urformen des Gehäuses 107 ausgebildet werden. Zum Urformen des Gehäuses 107 eignet sich beispielsweise ein Metallgussverfahren, ein Gesenkschmiedeverfahren oder, sofern das Gehäuse 107 aus einem Kunststoffmaterial gefertigt ist, ein Spritzgussverfahren. Ein für das Gehäuse 107 verwendetes Kunststoffmaterial kann eine Faserverstärkung aufweisen, welche beispielsweise ebenfalls beim Spritzgießen des Gehäuses 107 eingebracht werden kann.

Im Zylinder 140 ist ein Kolben 150 verschieblich gelagert, so dass beim Verschieben des Kolbens das freie Volumen der Zylinderbohrung 140 vergrößert oder verkleinert wird. Zusätzlich ist im Zylinder 140 eine Rückstellfeder 144 angeordnet, mit welcher der Kolben in eine Ausgangs- oder Ruhelage bewegt werden kann, bei welcher das Volumen des Zylinders 140 maximal ist. Das Volumen des Zylinders 140 korrespondiert mit einer im Gehäuse ausgebildeten Leitung 104, so dass Hydraulikfluid vom Zylinder 140 über die Leitung 104 in die Leitung 101 strömen kann.

Das Druckstück 120 weist eine Kolbenwiderlagefläche 124 auf, die mit dem Kolben 150 in Kontakt steht und über welche bei der Betätigung des Handhebels 110 die Kraft auf den Kolben 150 übertragen wird.

Über eine Griffweiteneinstellung 180 kann der Abstand zwischen dem Druckstück 120 und dem Handhebel 110 eingestellt werden. Hierdurch lässt sich der Abstand des Handhebels 110 vom Lenkerrohr an die Bedürfnisse des Benutzers des Fahrzeugs anpassen.

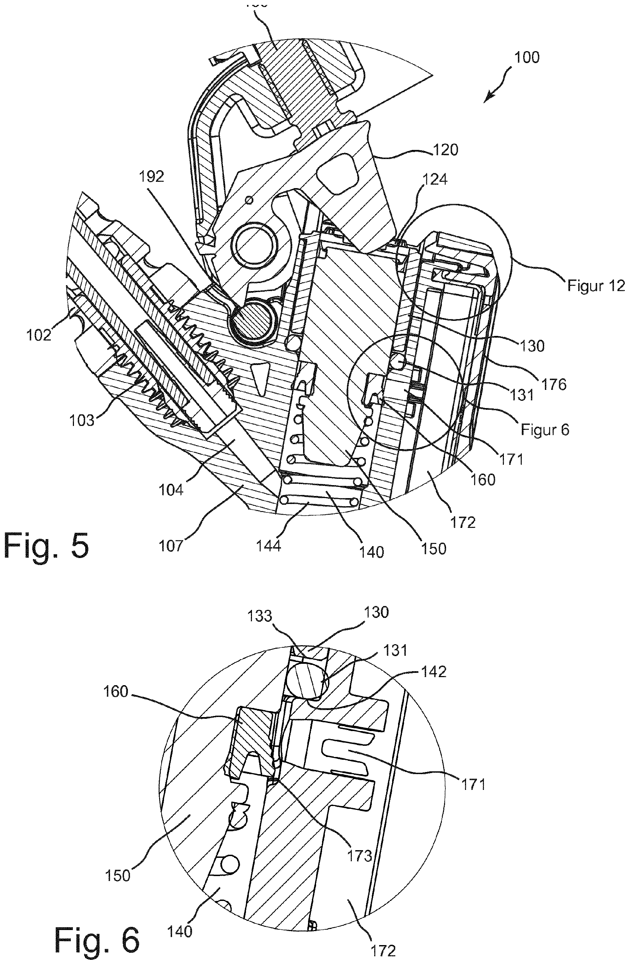

Weiterhin weist das Gehäuse 107 einen Ausgleichsraum 170 auf, welcher durch einen Balg 175 und eine Gehäusedeckel 176 gegen die Umgebung abgeschlossen ist. Der Innenraum 172 des Ausgleichsraums 170 korrespondiert über einen Verbindungskanal 171 mit dem Zylinder 140. Auf diese Weise kann Hydraulikfluid aus dem Ausgleichsraum 170 in den Zylinder 140 überführt werden, beispielsweise wenn das Hydraulikfluid abkühlt oder bei Bremsbelagverschleiß die Ruhelage des Nehmerkolbens verändert wird. Sofern der Nehmerkolben in eine Ausgangslage zurückgedrückt wird oder die Temperatur des Hydraulikfluids ansteigt, kann über den Verbindungskanal 171 Hydraulikfluid in den Ausgleichsraum 170 überführt werden. Wie in Fig. 6 sichtbar ist, befindet sich zwischen dem Kolben 150 und der Wandung des Zylinders 140 eine erste Dichtung 160, welche im dargestellten Ausführungsbeispiel als Lippendichtring ausgeführt ist. Beim Verschieben des Kolbens gleitet der Lippendichtring an der Zylinderwandung entlang und dichtet diese ab, so dass im Zylinder 140 ein Druck aufgebaut werden kann. Wenn der Kolben in die in Fig. 6 gezeigte Ruhelage zurückgleitet, liegt der Lippendichtring zumindest abschnittsweise nicht an der Zylinderwand an, so dass Hydraulikfluid über einen Überströmkanal 173 am Lippendichtring vorbei in den Verbindungskanal 171 strömen kann.

Wie am besten aus Fig. 5 ersichtlich ist, weist die Zylinderbohrung 140 einen Längsabschnitt auf, welcher einen größeren Durchmesser aufweist als der Außendurchmesser des Kolbens 150. In diesen Längsabschnitt ist eine Buchse 130 eingesetzt, welche die Zylinderbohrung 140 nach oben abschließt und welche einen Innendurchmesser aufweist, in welchem der Kolben 150 geführt werden kann bzw. welcher in etwa dem Innendurchmesser des Zylinders 140 entspricht. Somit kann bei der Endmontage der Geberarmatur der Kolben von hinten in die Zylinderbohrung eingesetzt werden und die Zylinderbohrung nachfolgend mit der Buchse 130 abgeschlossen werden.

In Fig. 6 ist weiterhin eine zweite Dichtung 131 dargestellt, welche zwischen einer Stirnfläche 133 der Buchse 130 und einer Anlagefläche 142 in der Zylinderwandung angeordnet ist. Die zweite Dichtung 131 kann durch die Buchse 130 mit einer axial wirkenden Kraft beaufschlagt werden, so dass sich die Dichtung 131, welche im dargestellten Ausführungsbeispiel als O-RingDichtung ausgeführt ist, verformt, so dass diese zuverlässig an der Kolbenwandung und der Zylinderwandung anliegt. Die zweite Dichtung 131 verhindert, dass Hydraulikfluid in die Umgebung austreten kann.

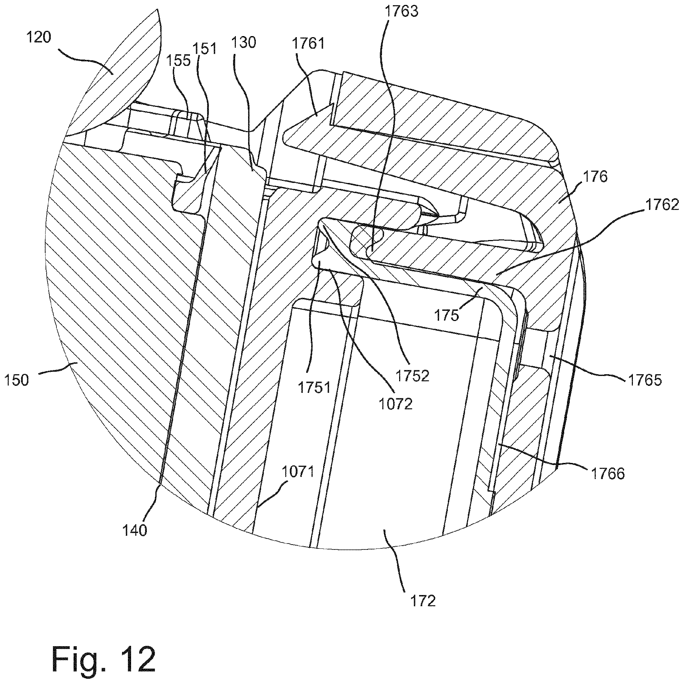

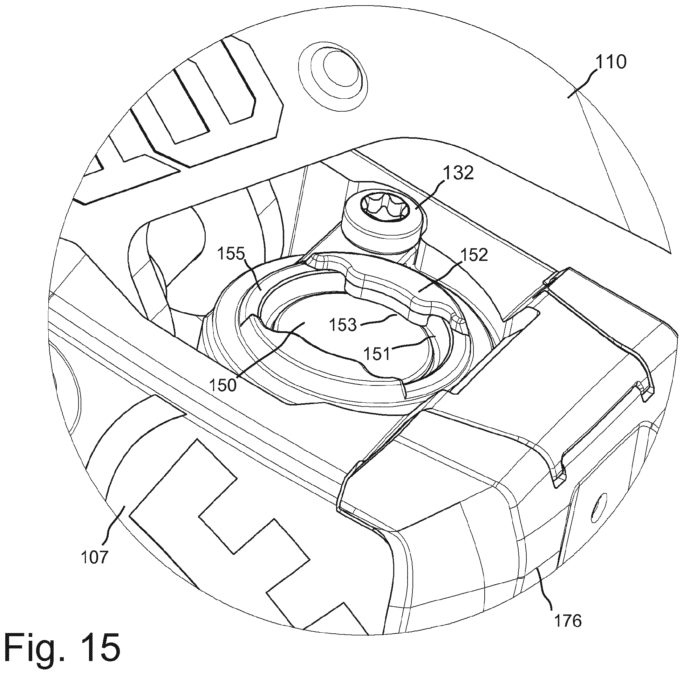

Schließlich zeigen die Figuren 12 und 15 einen Abstreifer 151. Der Abstreifer 151 ist dazu eingerichtet, in einigen Ausführungsformen der Erfindung das Eintreten von Staub und Schmutz in die Kolben-Zylinder-Paarung zu vermeiden. In einigen Ausführungsformen der Erfindung kann der Abstreifer alternativ oder zusätzlich das Austreten von Hydraulikfluid verhindern, so dass auch beim Auftreten kleiner Leckagen an der ersten Dichtung kein Hydraulikfluid am rückwärtigen Ende des Kolbens 150 austritt. Der Abstreifer kann mittels einer formschlüssigen Verriegelung auf den Kolben 150 geclipst werden oder mittels einer Presspassung mit dem Kolben verbunden werden. In einigen Ausführungsformen der Erfindung kann eine Schweiß- oder Klebeverbindung zwischen dem Abstreifer 151 und dem Kolben 150 eingesetzt werden.

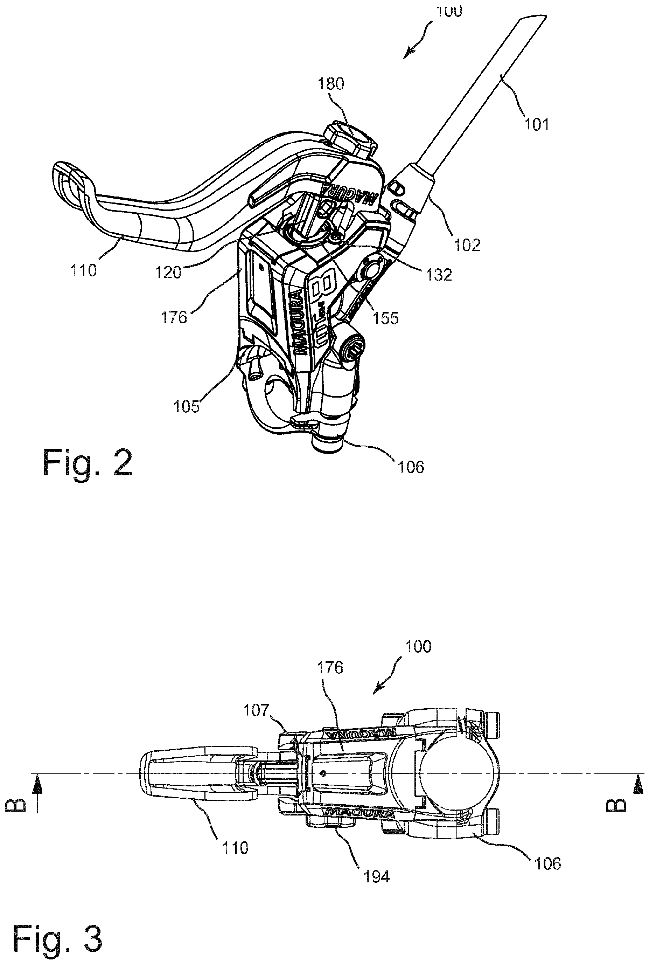

Weiterhin zeigen die Figuren ein Abschlusselement 155, welches in den Figuren 2, 12 und 15 dargestellt ist. Das Abschlusselement 155 weist einen in etwa ringförmigen Grundkörper auf. Der Grundkörper kann einen Durchmesser aufweisen, welche eine Montage innerhalb der Buchse 130 erlaubt. In anderen Ausführungsformen der Erfindung kann der Durchmesser des Abschlusselementes 155 größer sein, so dass auch die Buchse 130 durch das Abschlusselement 155 fixiert werden kann. In wiederum einer anderen Ausführungsform kann das Abschlusselement 155 integraler Bestandteil der Buchse 130 sein. Im dargestellten Ausführungsbeispiel wird das Abschlusselement 155 von einer Befestigungsschraube 132 gehalten, welche in Fig. 2 und Figur 15 dargestellt ist.

Das Abschlusselement 155 trägt in der dargestellten Ausführungsform zwei vorstehende erste Anschlagelemente 152. Die ersten Anschlagelemente 152 bilden in einigen Ausführungsformen der Erfindung den Endanschlag des Kolbens, so dass dieser nicht aus der Bohrung herausfallen kann. In der äußersten Endstellung liegt eine Teilfläche der Stirnseite des Kolbens 150 an den Anlageflächen 153 der ersten Anschlagelemente 152 an.

In einigen Ausführungsformen kann nur ein erstes Anschlagelement 155 vorhanden sein, welches dann einen größeren Abschnitt des Umfanges des Abschlusselementes belegt. Die in den Figuren dargestellte Ausführungsform mit zwei in etwa gegenüberliegenden ersten Anschlagelementen weist den Vorteil auf, dass das Druckstück 120 in den beiden Zwischenräumen zwischen den ersten Anschlagelementen 152 eintauchen kann, um den Kolben bei Betätigung des Handhebels gegen die Federkraft in die Bohrung einzudrücken. Weiterhin kann eintretender Schmutz über die beiden Zwischenräume zwischen den ersten Anschlagelementen 152 ausgeschoben werden, so dass sich dieser nicht an den Anlageflächen 153 festsetzen kann.

In einigen Ausführungsformen der Erfindung kann der Abstreifer in der Endstellung des Kolbens in einen Hinterschnitt der Buchse 130 aufgenommen sein. Dadurch kann der Bauraum verkleinert werden.

Anhand von Fig. 12 wird die Funktion des Ausgleichsbehälters erläutert. Der Innenraum 172 des Ausgleichsraumes ist zumindest einseitig, d. h. auf der der Zylinderbohrung 140 zugewandten Seite durch eine Begrenzungsfläche 1071 des Gehäuses 107 begrenzt. Die der Begrenzungsfläche 1071 gegenüberliegende Seite des Innenraumes 172 ist durch den Balg 175 begrenzt.

Der Balg 175 kann in einigen Ausführungsformen aus einem Elastomer bestehen oder ein Elastomer enthalten, beispielsweise EPDM. In anderen Ausführungsformen der Erfindung kann der Balg 175 aus Silikon bestehen. Der Balg 175 ist in jedem Fall aus einem elastischen Material gefertigt, sodass bei verringertem Volumen des Hydraulikfluides im Innenraum 172 das Volumen durch Verformung des Balges 175 verringert werden kann und bei Zunahme der Menge des Hydraulikfluides im Innenraum 172 das Volumen durch Ausbuchtung des Balges 175 vergrößert werden kann. Hierzu kann in einigen Ausführungsformen der Erfindung zwischen dem Deckel 176 und dem Balg 175 ein Spalt 1766 vorhanden sein, sodass auch bei maximaler Füllung des Innenraumes 172, beispielsweise bei fabrikneuen Geberarmaturen und maximaler Bremsbelagdicke, noch eine Volumenvergrößerung möglich ist, beispielsweise durch thermische Ausdehnung des Hydraulikfluides. Um einen Druckausgleich im Spalt 1766 bei Veränderung des Volumens des Innenraums 172 zu ermöglichen, kann eine Belüftungsbohrung 1765 im Deckel 176 vorhanden sein.

Der Balg 175 zeichnet sich in der dargestellten Ausführungsform der Erfindung dadurch aus, dass dieser zumindest an den dem Innenraum 172 zugewandten Begrenzungsflächen keinerlei Falten aufweist. Vielmehr ist der Balg 175 weitestgehend glattflächig ausgeführt, wobei die Volumenveränderung lediglich durch Verformung des Balges erfolgt. Hierdurch kann bei gleichem Bauraum des Gebers ein größeres Volumen des Innenraumes 172 bereit gestellt werden, da die effektive Wandstärke des erfindungsgemäßen glattflächigen Balges 175 geringer ist als bei einem Falten- beziehungsweise Federbalg. Weiterhin kann die Entlüftung des Innenraums 172 erleichtert sein, da sich in den Falten eines Faltenbalges oftmals Taschen bilden, aus welchen Luftblasen nur schwer entweichen können.

Fig. 12 zeigt weiterhin, dass der Deckel 176 durch eine Schnappverbindung am Gehäuse 107 befestigt ist. Dies erleichtert die Montage der erfindungsgemäßen Geberarmatur, da keine Schraubverbindung zeitaufwendig hergestellt werden muss. Vielmehr ist es ausreichend, den Balg 175 in die zugehörige Nut 1072 des Gehäuses 1071 zu legen und den Deckel 176 in einem nachfolgenden Arbeitsschritt aufzudrücken, sodass dieser verrastet. Hierzu steht zumindest ein Rastelement 1761 zur Verfügung, welches integraler Bestandteil des Deckels 176 sein kann. Das Rastelement 1761 besteht in an sich bekannter Weise aus einem Kragarm, an dessen Ende ein Kopf mit einer Gleitfläche angeordnet ist. Beim Aufdrücken des Deckels 167 gleitet die Gleitfläche am Gehäuse 107 ab und erzeugt dabei ein auslenkendes Moment auf dem Kragarm, sodass dieser federnd verformt wird. Nachdem die Anlagefläche des Rastelementes die Anlagefläche des Gehäuses 107 passiert hat, federt der Kragarm in seiner Ausgangslage zurück, sodass die in Fig. 12 gezeigt Endstellung des Rastelementes 1761 eingenommen wird.

Um nach dem Verrasten des Deckels 167 einen fluiddichten Abschluss des Innenraumes 172 zu ermöglichen, ist der Balg 175 mit zwei wulstartigen Verdickungen 1751 und 1752 versehen. Die Verdickungen 1751 und 1752 liegen im Grund der Nut 1072 an. Die Verdickungen 1751 und 1752 bilden zwei Dichtstellen beziehungsweise Dichtungsebenen im Grund der Nut 1072. Hierzu werden die Verdickungen 1751 und 1752 bei Betrieb der Geberarmatur von einem Steg 1762 mit einer Anpresskraft in Richtung des Nutgrundes beaufschlagt. Der Steg 1762 kann ebenfalls integraler Bestandteil des Deckels 176 sein und beim Urformen des Deckels angeformt werden, beispielsweise im Spritzgussverfahren. Auch an dem der Nut 1072 zugewandten Ende des Steges 1762 kann eine wulstförmige Verdickung 1763 vorhanden sein, welche in zusammenwirkend mit dem Balg 175 eine dritte Dichtstellte bildet. Der in der Nut 1072 aufgenommene Teil des Balges 175 kann eine Materialstärke von mehr als 0,8, mehr als 1,0 oder mehr als 1,5 mm aufweisen, sodass einerseits eine federnde Rückstellkraft über den Steg 1762 auf dem Deckel 176 ausgeübt wird, sodass die Raststelle 1761 sicher fixiert wird. Weiterhin kann das Material des Balges 175 im Bereich der Nut 1072 plastisch fließen, sodass sich eine besonders gute Abdichtung des Innenraumes 172 ergibt.

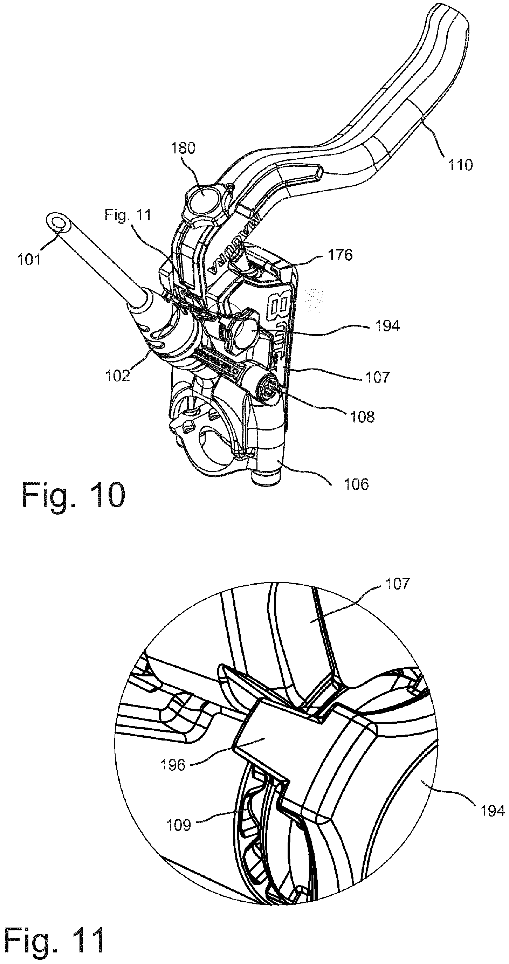

Anhand der Fig. 4 und der Figuren 8 bis 11 wird die Funktionsweise einer Druckpunkteinstellung erläutert. Die Druckpunkteinstellung weist einen Bolzen 190 auf, welcher einen Betätigungsknopf 194 aufweist, mit welchem der Bolzen vom Benutzer in eine gewünschte Stellung drehbar ist. Am Drehknopf 194 ist weiterhin ein zweites Anschlagelement 196 angeordnet, dessen Funktion anhand von Fig. 10 und Fig. 11 erläutert wird.

Der Schaft des Bolzens weist drei Längsabschnitte 191, 192 und 193 auf. Dabei sind die Längsabschnitte 191 und 193 als Lagerflächen ausgebildet, welche Teil eines Gleitlagers sind und mit welchen der Bolzen 190 am Gehäuse 107 des Gebers anliegt und im Gehäuse 107 drehbar ist. Im dritten Längsabschnitt 193 ist weiterhin ein Anguss 195 angeordnet, welcher beim Herstellen des Bolzens 190 durch Spritzgießen entstehen kann. Der Anguss 195 kann in anderen Ausführungsformen der Erfindung auch an anderer Stelle des Bolzens 190 angeordnet sein, eine andere Form aufweisen oder ganz entfallen. Der Anguss 195 ist für die Funktion des Bolzens 190 nicht
wesentlich.

Zwischen dem ersten Längsabschnitt und dem dritten Längsabschnitt 193 ist ein exzentrisch gelagerter Längsabschnitt 192 angeordnet. Das Druckstück 120 stützt sich am exzentrischen zweiten Längsabschnitt 192 ab, so dass bei Drehung des Bolzens 190 über das Einstellrad 194 die Ruheposition des Druckstücks 120 geändert wird. Über die Anlagefläche 124 ändert sich damit die Ruhestellung, d.h. die axiale Position des Kolbens 150 im Zylinder 140 in Abhängigkeit der Stellung des Bolzens 190.

Die Anlagefläche bzw. der zweite Längsabschnitt 192 des Bolzens 190 kann polygonal oder rund ausgeführt sein, so dass sich eine stufenlose oder stufige Einstellung des Druckpunktes ergibt.

Bei der Druckpunkteinstellung verstellt sich gleichzeitig die Griffweite. Da die Griffweite mit der Griffweiteneinstellung 180 unabhängig vom Druckpunkt verstellt werden kann, kann eine Verstellung der Griffweite beim Einstellen des Druckpunktes mit der Griffweiteneinstellung 180 kompensiert werden.

Wie anhand von Fig. 6 ersichtlich ist, kann der Kolben 150 beim Verstellen des Bolzen 190 in seiner Ruhelage soweit in den Zylinder 140 eingeschoben werden, dass die Verbindung zwischen dem Ausgleichsraum 170 und dem Zylinder 140 unterbrochen ist. Dadurch arbeitet das offene Hydrauliksystem als geschlossenes Hydrauliksystem. Dies soll bei offenen Hydrauliksystemen in der Regel vermieden werden. Daher kann der Bolzen 190 ein zweites Anschlagelement 196 aufweisen, welches sich am Gehäuse 107 abstützt, wie anhand der Figur 11 ersichtlich ist. Dadurch kann der Versstellbereich der Druckpumpeneinstellung soweit begrenzt werden, dass ein unbeabsichtigtes Überfahren des Überströmkanals 173 vermieden wird.

Weiterhin zeigt Fig. 11 optionale Rastelemente 109, in welche der Bolzen 190 einrasten kann, so dass eine unerwünschte Verstellung vermieden werden kann beispielsweise durch Vibrationen. Die relative Ausrichtung der Rastelemente 109 und des zweiten Anschlagelementes 196 kann so ausgebildet sein, dass der Bolzen 190 bei Anschlag des zweiten Anschlagelements 196 am Gehäuse 107 stets in eine Raststufe zurückdreht, in welcher das zweite Anschlagelement 196 nicht mit dem Gehäuse 107 in Kontakt steht. Sofern der Überströmkanal 173 bei Anliegen des zweiten Anschlagelementes 196 am Gehäuse 107 von der Dichtung 160 verschlossen ist, kann das Zurückdrehen in die nächstliegende Raststufe dazu führen, dass der Kolben so weit zurückfährt, dass der Überströmkanal 173 wieder geöffnet ist.

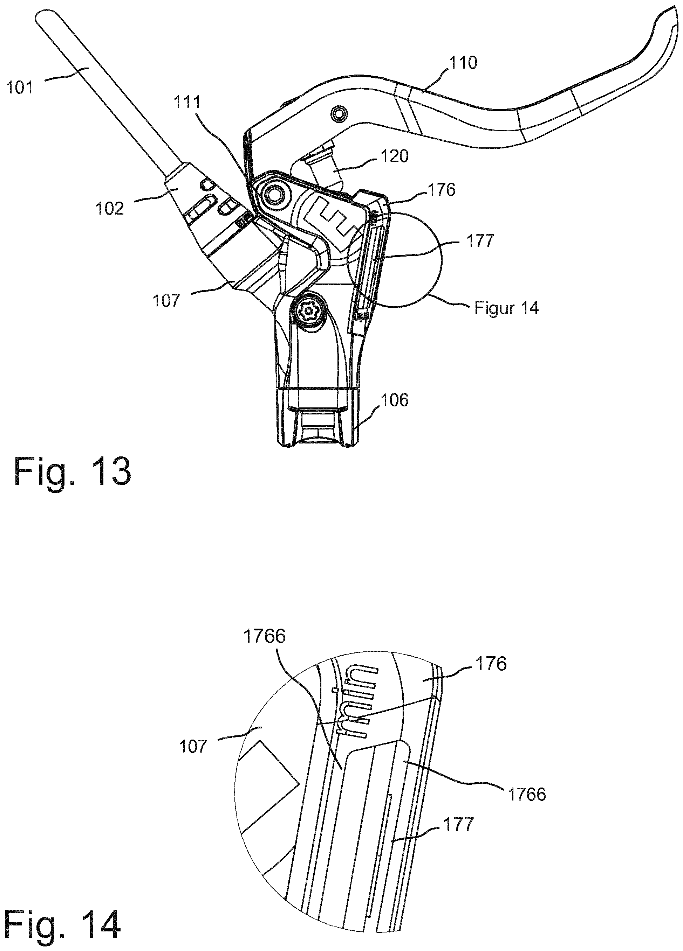

Anhand der Figuren 13 und 14 wird eine zweite Ausführungsform der Erfindung näher erläutert. Gleiche Bestandteile sind mit gleichen Bezugszeichen versehen, sodass sich die nachfolgende Beschreibung auf die Unterschiede zur vorstehend beschriebenen ersten Ausführungsform der Erfindung beschränkt.

Ausgehend von der in Fig. 1 beschriebenen ersten Ausführungsform unterscheidet sich die Ausführungsform gemäß Fig. 13 dadurch, dass der Deckel 176 ein Sichtfenster 177 aufweist. Das Sichtfenster 177 ermöglicht den Einblick in den Ausgleichsraum 170. Hierdurch kann der Flüssigkeitsstand des Hydraulikfluides im Ausgleichsraum 170 vom Benutzer des lenkergeführten Fahrzeuges auf besonders einfache Weise überwacht werden. Der Flüssigkeitsstand kann beispielsweise absinken, wenn die Bremsbeläge zunehmend verschleißen und sich durch eine Belagnachstellung das Volumen des Nehmerzylinders in der Ruhelage vergrößert. Weiterhin kann der Flüssigkeitsstand im Ausgleichsraum 170 absinken, wenn der Geberzylinder, der Nehmerzylinder oder die Hydraulikleitung 101 undicht werden und Hydraulikfluid austritt. Da eine solche Beschädigung zum Totalausfall des hydraulischen Betätigungselementes führen kann, ist es wünschenswert, dass der Benutzer einen solchen Schaden frühzeitig erkennen kann.

Wie aus Fig. 14 ersichtlich ist, ermöglicht das Sichtfenster 177 die Beurteilung der Größe des Spaltes 1766. Sofern der Balg 175 aus einem opaken Material gefertigt ist, beispielsweise einem schwarzen Elastomer, kann das Sichtfenster 177 in einigen Ausführungsformen der Erfindung bei vollständiger Füllung des Innenraumes 172 mit Hydraulikfluid vollständig schwarz erscheinen, da das Sichtfenster 177 vollständig vom Balg 175 ausgefüllt ist. Wenn das Volumen des Hydraulikfluides im Innenraum 172 sinkt, nähert sich die Außenfläche des Balges 175 der inneren Begrenzungsfläche 1701 an, sodass sich der Spalt 1766 vergrößert. Dies kann im Sichtfenster 177 wahrgenommen werden, da nicht mehr die gesamte Fläche des Sichtfensters 177 schwarz erscheint. In einigen Ausführungsformen der Erfindung kann das Sichtfenster eine Minimalmarkierung aufweisen, welche das Mindestvolumen des Innenraums 172 definiert und damit das minimale Füllvolumen mit Hydraulikfluid. In anderen Ausführungsformen der Erfindung kann die Minimalmarkierung durch die Breite des Sichtsfensters 177 gegeben sein, sodass das Minimalvolumen des Innenraumes 172 erreicht ist, wenn das Sichtfenster 177 vollständig frei ist beziehungsweise wenn der Balg 175 im Sichtfenster 177 nicht mehr sichtbar ist.

Das anhand der Figuren 13 und 14 erläuterte Prinzip kann selbstverständlich auch variiert werden. Beispielsweise kann der Deckel 176 vollständig transparent ausgeführt sein, sodass ein separates Sichtfenster 177 entfällt beziehungsweise das Sichtfenster 177 die komplette Fläche des Deckels 176 einnimmt.

In einigen Ausführungsformen der Erfindung kann der Balg 175 aus einem transparenten oder transluzenten Material gefertigt sein, beispielsweise einem Silikon. In diesem Fall erlaubt das Sichtfenster 177 nicht nur die Beurteilung des Spaltes 1766 sondern einen unmittelbaren Blick auf das Hydraulikfluid. Damit kann in einigen Ausführungsformen der Erfindung neben dem Füllstand auch die Qualität des Hydraulikfluides beurteilt werden. Dies erlaubt beispielsweise, eine Trübung durch Abrieb oder eingeschlossene Luftblasen zu erkennen, so dass der Benutzer den Zeitpunkt einer notwendigen Entlüftung erkennen kann. Dadurch kann die Betriebssicherheit erhöht sein.

Selbstverständlich ist die Erfindung nicht auf die in den Figuren dargestellten Ausführungsformen beschränkt. Die vorstehende Beschreibung ist nicht als beschränkend, sondern als erläuternd anzusehen. Merkmale aus unterschiedlichen, vorstehend detailliert beschriebenen Ausführungsformen der Erfindung können zu weiteren Ausführungsformen kombiniert werden. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Geberarmatur (100) für ein hydraulisches Betätigungselement mit einem Gehäuse (107), welches einen Ausgleichsraum (170) mit einem Innenraum (172) und einen Zylinder (140) aufweist, wobei die Geberarmatur (100) weiter eine im Zylinder (140) geführten Kolben (150) aufweist, wobei der Zylinder (140) und der Ausgleichsraum (170) in zumindest einer Stellung des Kolbens durch einen Verbindungskanal (171) verbunden sind,
**dadurch gekennzeichnet, dass**
an der Mündung des Verbindungskanals (171) in der Zylinderwand ein Überströmkanal (173) angeordnet ist, welcher sich über eine Teilstrecke des Umfangs der Zylinderwand erstreckt.

2. Geberarmatur nach Anspruch 1, **dadurch gekennzeichnet, dass** der Innendurchmesser des Zylinders (140) in zumindest einem Längsabschnitt größer ist als der Außendurchmesser des Kolbens (150) und in diesem Längsabschnitt eine Buchse (130) angeordnet ist, in deren Innenraum der Kolben (150) führbar ist.

3. Geberarmatur nach Anspruch 2, **dadurch gekennzeichnet, dass** zwischen einer Stirnfläche (133) der Buchse (130) und einer Anlagefläche (142) eine zweite Dichtung (131) angeordnet ist.

4. Geberarmatur nach einem der Ansprüche 1 bis 3, **dadurch gekennzeichnet, dass** zwischen Kolben und Zylinder eine erste Dichtung (160) angeordnet ist oder
dass der Kolben eine erste Dichtung (160) trägt.

5. Geberarmatur nach einem der Ansprüche 2 bis 4, **dadurch gekennzeichnet, dass** die Buchse (130) ein Außengewinde aufweist und in ein Innengewinde im Gehäuse (107) der Geberarmatur (100) eingeschraubt ist.

6. Geberarmatur nach einem der Ansprüche 2 bis 4, **dadurch gekennzeichnet, dass** die Buchse (130) eine Presspassung in einer Bohrung im Gehäuse (107) der Geberarmatur (100) ausbildet

7. Geberarmatur nach einem der Ansprüche 2 bis 4, **dadurch gekennzeichnet, dass** die Buchse (130) in eine Bohrung im Gehäuse (107) der Geberarmatur (100) eingesetzt und dort mit einer Sicherungsschraube (132) fixiert ist.

8. Geberarmatur nach einem der Ansprüche 2 bis 4, **dadurch gekennzeichnet, dass** die Buchse (130) in eine Bohrung im Gehäuse (107) der Geberarmatur (100) eingesetzt und dort durch einen Teilabschnitt eines Deckels (176) eines Ausgleichsraumes (170) fixiert ist.

9. Geberarmatur nach einem der Ansprüche 2 bis 8, **dadurch gekennzeichnet, dass** die Buchse (130) einen Anschlag aufweist, gegen welche der Kolben (150) mit einer Druckfeder (144) führbar ist.

10. Geberarmatur nach einem der Ansprüche 1 bis 8, weiterhin enthaltend ein Abschlusselement (155), welches zumindest ein erstes Anschlagelement (152) trägt, welches eine Anlagefläche (153) aufweist, gegen welche der Kolben (150) mit einer Druckfeder (144) führbar ist.

11. Geberarmatur nach Anspruch 10, **dadurch gekennzeichnet, dass** das Abschlusselement (155) zumindest zwei vorstehende erste Anschlagelemente (152) aufweist, welche durch Zwischenräume voneinander beabstandet sind.

12. Geberarmatur nach einem der Ansprüche 9 bis 11, **dadurch gekennzeichnet, dass** das Abschlusselement (155) und/oder die Buchse (130) mit einer Verschraubung (132) am Gehäuse (107) befestigt ist.

13. Geberarmatur nach einem der Ansprüche 1 bis 12, **dadurch gekennzeichnet, dass** die mittels eines Handhebels (110) erzeugbare Kraft über ein Druckstück (120) auf den Kolben (150) übertragen wird, wobei zwischen dem Druckstück (120) und dem Gehäuse (107) eine Schenkelfeder (121) angeordnet ist.

14. Geberarmatur nach Anspruch 13, **dadurch gekennzeichnet, dass** die Ruheposition des Kolbens (150) über einen Excenterbolzen (190) einstellbar ist, welcher einen verstellbaren Anschlag für das Druckstück (120) bildet, wobei der Excenterbolzen (190) ein zweites Anschlagelement (196) am Gehäuse (107) aufweist, welcher den Verstellbereich so begrenzt, dass in der Ruheposition des Kolbens (150) der Innenraum (172) des Ausgleichsraums (170) über den Verbindungskanal (171) mit dem Zylinder (140) verbunden ist.

15. Lenkergeführtes Fahrzeug mit einer Geberarmatur nach einem der Ansprüche 1 bis 14.

## Claims

1. Master cylinder fitting (100) for a hydraulic actuating element, having a housing (107), which has a compensation chamber (170) with an inner chamber (172) and a cylinder (140), the master cylinder fitting (100) further having a piston (150) guided in the cylinder (140), the cylinder (140) and the compensation chamber (170) being connected in at least one position of the piston via a connection channel (171),
**characterized in that**
an overflow channel (173) is arranged at the mouth of the connection channel (171) in the cylinder wall and extends over a partial section of the circumference of the cylinder wall.

2. Master cylinder fitting according to claim 1, **characterized in that**, in at least one longitudinal section, the inner diameter of the cylinder (140) is greater than the outer diameter of the piston (150) and a bush (130) is arranged in this longitudinal section, in the interior of which bush the piston (150) can be guided.

3. Master cylinder fitting according to claim 2, **characterized in that** a second seal (131) is arranged between an end face (133) of the bush (130) and an abutment surface (142).

4. Master cylinder fitting according to any of claims 1 to 3,
**characterized in that** a first seal (160) is arranged between the piston and the cylinder or that the piston carries a first seal (160).

5. Master cylinder fitting according to any of claims 2 to 4,
**characterized in that** the bush (130) has an external thread and is screwed into an internal thread in the housing (107) of the master cylinder fitting (100).

6. Master cylinder fitting according to any of claims 2 to 4,
**characterized in that** the bush (130) forms a press fit in a bore in the housing (107) of the master cylinder fitting (100).

7. Master cylinder fitting according to any of claims 2 to 4,
**characterized in that** the bush (130) is inserted into a bore in the housing (107) of the master cylinder fitting (100) where it is fixed with a securing screw (132).

8. Master cylinder fitting according to any of claims 2 to 4,
**characterized in that** the bush (130) is inserted into a bore in the housing (107) of the master cylinder fitting (100) where it is secured by a partial section of a cover (176) of a compensation chamber (170).

9. Master cylinder fitting according to any of claims 2 to 8,
**characterized in that** the bush (130) has a stop against which the piston (150) can be guided by a compression spring (144).

10. Master cylinder fitting according to any of claims 1 to 8, further containing a closure element (155), which carries at least one first stop element (152) that has an abutment surface (153) against which the piston (150) can be guided with a compression spring (144).

11. Master cylinder fitting according to claim 10, **characterized in that** the closure element (155) has at least two projecting first stop elements (152), which are spaced apart from one another by intermediate spaces.

12. Master cylinder fitting according to any of the claims 9 to 11,
**characterized in that** the closure element (155) and/or the bush (130) is fastened to the housing (107) by means of a screw connection (132).

13. Master cylinder fitting according to any of claims 1 to 12, **characterized in that** the force which can be generated by means of a hand lever (110) is transferred via a pressure piece (120) to the piston (150), a leg spring (121) being arranged between the pressure piece (120) and the housing (107).

14. Master cylinder fitting according to claim 13, **characterized in that** the rest position of the piston (150) can be set via an eccentric pin (190) which forms an adjustable stop for the pressure piece (120), the eccentric pin (190) having a second stop element (196) on the housing (107) which limits the adjustment range such that, in the rest position of the piston (150), the inner chamber (172) of the compensation chamber (170) is connected to the cylinder (140) via the connection channel (171).

15. Handlebar-guided vehicle with a master cylinder fitting according to any of claims 1 to 14.

## Revendications

1. Dispositif émetteur (100) pour un élément d'actionnement hydraulique, comportant un boîtier (107) qui présente un espace de compensation (170) pourvu d'un volume intérieur (172) et d'un cylindre (140), le dispositif émetteur (100) comprenant en outre un piston (150) guidé dans le cylindre (140), le cylindre (140) et l'espace de compensation (170) étant reliés par un canal de liaison (171) dans au moins une position du piston,
**caractérisé en ce que**
à l'embouchure du canal de liaison (171), il est prévu un canal de débordement (173) dans la paroi du cylindre, qui s'étend sur une longueur partielle du pourtour de la paroi de cylindre.

2. Dispositif émetteur selon la revendication 1,
**caractérisé en ce que**
dans au moins un tronçon longitudinal, le diamètre intérieur du cylindre (140) est supérieur au diamètre extérieur du piston (150), et une douille (130) est agencée dans ledit tronçon longitudinal, dans le volume intérieur de laquelle le piston (150) peut être guidé.

3. Dispositif émetteur selon la revendication 2,
**caractérisé en ce que**
un second joint d'étanchéité (131) est disposé entre une surface frontale (133) de la douille (130) et une surface d'appui (142).

4. Dispositif émetteur selon l'une des revendications 1 à 3,
**caractérisé en ce que**
un premier joint d'étanchéité (160) est disposé entre le piston et le cylindre, ou **en ce que**
le piston porte un premier joint d'étanchéité (160).

5. Dispositif émetteur selon l'une des revendications 2 à 4,
**caractérisé en ce que**
la douille (130) présente un filetage et est visée dans un taraudage dans le boîtier (107) du dispositif émetteur (100).

6. Dispositif émetteur selon l'une des revendications 2 à 4,
**caractérisé en ce que**
la douille (130) constitue un ajustement serré dans un perçage dans le boîtier (107) du dispositif émetteur (100).

7. Dispositif émetteur selon l'une des revendications 2 à 4,
**caractérisé en ce que**
la douille (130) est insérée dans un perçage dans le boîtier (107) du dispositif émetteur (100) et y est fixée par une vis de blocage (132).

8. Dispositif émetteur selon l'une des revendications 2 à 4,
**caractérisé en ce que**
la douille (130) est insérée dans un perçage dans le boîtier (107) du dispositif émetteur (100) et y est fixée par une portion partielle d'un couvercle (176) d'un espace de compensation (170).

9. Dispositif émetteur selon l'une des revendications 2 à 8,
**caractérisé en ce que**
la douille (130) présente une butée contre laquelle le piston (150) peut être guidé par un ressort de compression (144).

10. Dispositif émetteur selon l'une des revendications 1 à 8, comportant en outre un élément de terminaison (155) qui porte au moins un premier élément de butée (152) qui présente une surface d'appui (153) contre laquelle le piston (150) peut être guidé par un ressort de compression (144).

11. Dispositif émetteur selon la revendication 10,
**caractérisé en ce que**
l'élément de terminaison (155) présente au moins deux premiers éléments de butée (152) en saillie qui sont espacés l'un de l'autre par des interstices.

12. Dispositif émetteur selon l'une des revendications 9 à 11,
**caractérisé en ce que**
l'élément de terminaison (155) et/ou la douille (130) sont fixés sur le boîtier (107) par un moyen de vissage (132).

13. Dispositif émetteur selon l'une des revendications 1 à 12,
**caractérisé en ce que**
la force susceptible d'être générée par un levier à main (110) est transmise au piston (150) par un élément de compression (120), un ressort à branches (121) étant disposé entre l'élément de compression (120) et le boîtier (107).

14. Dispositif émetteur selon la revendication 13,
**caractérisé en ce que**
la position de repos du piston (150) est réglable par un goujon excentrique (190) qui constitue une butée réglable pour l'élément de compression (120), le goujon excentrique (190) comprenant un second élément de butée (196) sur le boîtier (107), qui limite la plage de réglage de telle sorte que dans la position de repos du piston (150) le volume intérieur (172) de l'espace de compensation (170) est relié au cylindre (140) par le canal de liaison (171).

15. Véhicule guidé par guidon comportant un dispositif émetteur selon l'une des revendications 1 à 14.
